# EUROPEAN PATENT APPLICATION

(11) **EP 1 522 340 A1**
(43) Date of publication of application: **13.04.2005**
(21) Application number: 04020803.5
(22) Date of filing: 01.09.2004
(51) Int. Cl.: B01J 19/00, B05D 1/20

(54) **Beads with immobilized amphiphilic molecules, method of fabrication thereof, and method of arraying beads for capillary beads-array**

(30) Priority: 08.10.2003 JP 2003349818
(71) Applicant: Hitachi Software Engineering Co., Ltd., Yokohama-shi, Kanagawa 230-0045 (JP)
(72) Inventor: Kogi, Osamu, Hitachi Software Engineering CoLtd, Tokyo 140-0002 (JP)
(74) Representative: Liesegang, Eva

(57) **Abstract**

A capillary beads-array attractive to users is provided by immobilizing amphiphilic molecules on the surface of beads (212) in uniform orientation and arraying the beads in a capillary formed on a soft resin. A monomolecular layer of the amphiphilic molecules is formed on the bead surface (212) by putting beads having hydrophilic portions on the surface in water phase, dropping amphiphilic molecules containing a hydrophilic portion and a hydrophobic portion onto the water phase, pouring an oil lighter than water to form a monomolecular film of the amphiphilic molecules at an oil/water interface (205), capturing a single bead with the tip of a bead picker (211), lifting up the tip of the bead picker (211) to allow the bead (212) to reach the oil/water interface (205), and allowing to form a covalent bond between a functional group in the hydrophilic portion on the bead surface (212) and a functional group in the hydrophilic portion of the amphiphilic molecules.

## Description

### FIELD OF THE INVENTION

The present invention relates to a method of immobilizing probe molecules on the surface of granular beads, and particularly a method of immobilizing monomolecular layers of amphiphilic molecules on the surface of granular beads in a plurality of layers.

### BACKGROUND OF THE INVENTION

A capillary beads-array in which beads with immobilized probe molecules on the surface are arrayed in a capillary formed on a soft resin or the like in a predetermined number and with a predetermined order has been disclosed in JP-A NO.243997/1999. A conventional technology to immobilize DNA probe molecules on the beads of the capillary beads-array is cited in JP-A NO.243997/1999. This conventional technology utilizes binding of DNA probes separately for each kind of the probes on the surface of microparticles. Specifically, immobilization of DNA probes on a solid surface uses any of the following methods: (1) a method to take advantage of the binding between biotin and avidin, (2) a method to immobilize DNA probes on Au (gold) surface via SH group (Biophysical Journal 71, 1079-1086 (1996)), (3) a method to immobilize DNA probes on a glass surface (Analytical Biochemistry 247, 96-101 (1997)), (4) a method to immobilize DNA probes into an element matrix of acrylamide gel coated on a glass surface (Proc. Natl. Acad. Sci. USA 93, 4913-4918 (1996)), and the like. These methods allow a large amount of DNA probes to be immobilized on a solid surface with ease. The technology disclosed in JP-A NO.24399 7/1999 represents a method to immobilize probe molecules using a chemical reaction in solution, which suggests its usefulness for probe molecules with sufficiently high solubility in solvents. In other words, this conventional technology relates to the one in which probe molecules with sufficiently high solubility in solvents are immobilized on the surface of beads. Nothing is mentioned about technology to immobilize probe molecules with extremely low solubility in solvents on the surface of beads.

Accordingly, it was necessary to develop a technology to immobilize probe molecules with extremely low solubility in solvents, such as those represented by amphiphilic molecules having both hydrophilic portion and hydrophobic portion, on the surface of beads in uniform orientation.

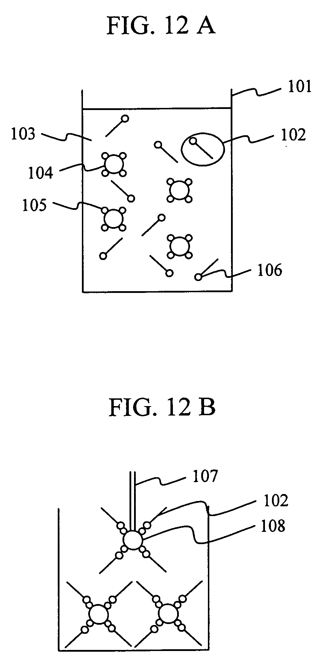

Fig. 12 is a schematic drawing to show an embodiment in a conventional method to immobilize probe molecules on beads and to capture a single bead with an immobilized probe with the tip of a bead picker of a beads-arrayer. A solvent 103 in which probe molecules 102 are dissolved uniformly is poured into a vessel 101. Beads 104 are put in the solvent 103. The solvent 103 containing the probe molecules 102 and the beads 104 is stirred for a certain time period. A functional group 105 on the surface of the beads 104 and a functional group 106 of the probe molecules 102 are allowed to form a covalent bond. Thus, the probe molecules 102 are immobilized on the surface of the beads 104 (Fig. 12A). The tip of a bead picker 107 of a beads-arrayer is moved to above the vessel 101 and lifted down into the solvent 103 to capture a single bead 108 with immobilized probe molecules 102 on the surface (Fig. 12B). This conventional method is applicable only to the probe molecules 102 that are uniformly soluble in the solvent 103, and it is very difficult to apply the conventional method to amphiphilic molecules with extremely low solubility in the solvent.

A group of amphiphilic molecules that contain both hydrophilic portion and hydrophobic portion within their molecules includes membrane proteins, receptors, and the like. These can serve as a very useful probe molecule in biochemistry and immunology. Immobilization of these amphiphilic molecules on the surface of granular beads is directly linked to the task of fabricating a capillary beads-array with high value-added features to users. A characteristic of amphiphilic molecules is their very low solubility in solvents.

In the conventional technology for immobilizing probe molecules on beads described in JP-A NO.243997/1999, the probe molecules are dissolved in a solvent to prepare a uniform solution, and then immobilized on a glass surface using a chemical reaction in the solution. Therefore, it is extremely difficult to immobilize amphiphilic molecules that are scarcely soluble in solvents on the surface of beads by the conventional technology. Moreover, there is a risk in the conventional technology that the probe molecules immobilized on the surface of the beads are not oriented uniformly, since the probe molecules move randomly in solutions. The orientation of the probe molecules immobilized on the beads is a significant factor that influences the chemical properties of the beads with immobilized probe molecules on the surface.

### SUMMARY OF THE INVENTION

It is thus an object of the present invention to provide a method of immobilizing amphiphilic molecules on the surface of beads in uniform orientation using the tip of a bead picker that can manipulate the beads one by one with the aid of a physical force such as electrostatic attraction or magnetic force. Further, it is an object of the present invention to provide a method of fabricating a capillary beads-array by arraying the beads in a capillary formed on a soft resin and the like. Still further, it is an object of the present invention to provide the capillary beads-array with high value-added features to users.

As a result of assiduous research, the present inventors have arrived at the present invention by discovering that the problems mentioned above can be solved by forming a monomolecular film of amphiphilic molecules at any one of an air/water interface formed by air and water, an air/oil interface formed by air and oil, and an oil/water interface formed by oil and water; capturing a single granular bead with the tip of a bead picker; moving the bead in the direction perpendicular to the monomolecular film of the amphiphilic molecules by moving the tip of the bead picker in the direction perpendicular to the interface; and immobilizing a monomolecular layer of the amphiphilic molecules on the surface of the beads.

In other words, a first aspect of the present invention is a bead with immobilized amphiphilic molecules on the surface, and more specifically, the bead with the immobilized monomolecular layer of amphiphilic molecules in uniform orientation in multilayers on the surface.

Here, the bead is made of glass, plastic, or the like, and is a sphere with a diameter of several micrometers to several tens of micrometers. Specifically, the bead includes a glass bead, polystyrene bead, polypropylene bead, magnetic bead, and the like, and is the one whose fluorescent color and the like are measured with the use of a flow cytometer and the like.

A characteristic feature of the bead with immobilized amphiphilic molecules on the surface of the present invention is that the monomolecular layer of the amphiphilic molecules is immobilized on the surface of the bead in multilayers. This allows to provide the surface of the bead with various functions by selecting the kind of the amphiphilic molecules constituting the monomolecular layer and the number of the monomolecular layers to be layered, thereby becoming highly suitable for biochemical or immunological tests with beads.

A second aspect of the present invention is a method of producing beads with immobilized amphiphilic molecules on the surface. A characteristic feature of the method is that the bead with the immobilized monomolecular layer of amphiphilic molecules in multilayers on the surface are produced by forming a monomolecular film of amphiphilic molecules at any one of (1) an air/water interface formed by air and water, (2) an air/oil interface formed by air and oil, and (3) an oil/water interface formed by oil and water; capturing a single granular bead with the tip of a bead picker; moving the bead in the direction perpendicular to the monomolecular film of the amphiphilic molecules by moving the tip of the bead picker in the direction perpendicular to the interface to immobilize the monomolecular layer of the amphiphilic molecules on the surface of the bead; and repeating the above operation a multiple number of times.

In the method of producing the beads with immobilized amphiphilic molecules on the surface of the present invention, one bead is produced per one tip of the bead picker. It is apparent that a plurality of the beads may be produced at a time by using a plurality of the tips of the bead pickers at the same time.

A third aspect of the present invention is a method of fabricating a capillary beads-array in which beads with immobilized amphiphilic molecules on the surface are arrayed in a capillary formed on a soft resin or the like. The fabricating method is that the capillary beads-array having the beads with immobilized amphiphilic molecules on the surface arrayed in a predetermined order and with a predetermined number is fabricated by forming a monomolecular film of amphiphilic molecules at any one of (1) an air/water interface formed by air and water, (2) an air/oil interface formed by air and oil, and (3) an oil/water interface formed by oil and water; capturing a single granular bead with the tip of a bead picker of a beads-arrayer; moving the bead in the direction perpendicular to the monomolecular film of the amphiphilic molecules by moving the tip of the bead picker of the beads-arrayer in the direction perpendicular to the interface to immobilize the monomolecular layer of the amphiphilic molecules on the surface of the bead; moving the tip of the bead picker of the beads-arrayer to an inlet of the capillary formed on the soft resin; releasing the bead from the tip of the bead picker of the beads-arrayer; introducing the bead into the inlet of the capillary; and repeating the above operation a multiple number of times.

According to the present invention, amphiphilic molecules that are scarcely soluble in solvents can be immobilized readily and reliably on the surface of granular beads in multilayers, each in a state of a monomolecular layer with uniform molecular orientation. Furthermore, a capillary beads-array may be fabricated by arraying the beads inside a capillary formed of soft resin or the like. A beads-array product attractive to users may be provided by immobilizing amphiphilic molecules highly useful in biochemistry and immunology on the surface of granular beads, arraying the beads, and fabricating the capillary beads-array.

### BRIEF DESCRIPTION OF THE DRAWINGS

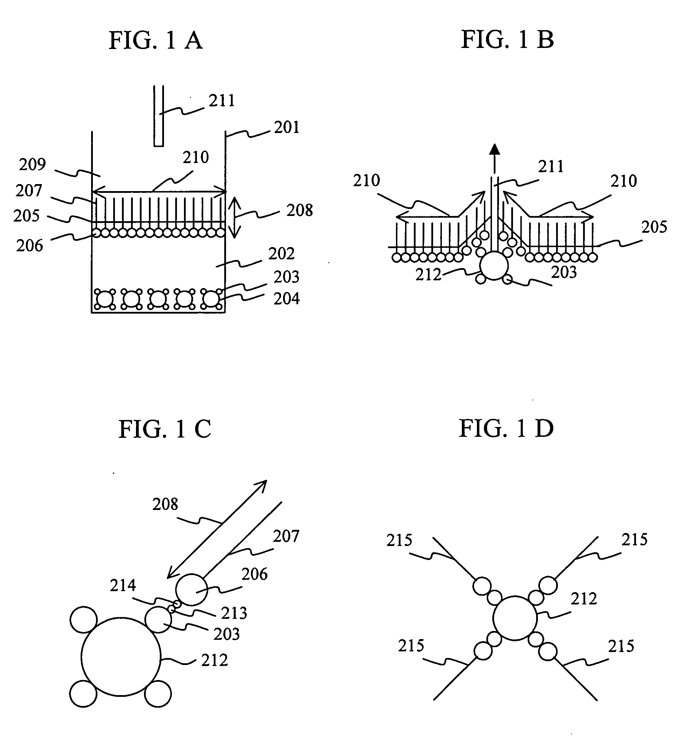

Figs. 1A, 1B, 1C, and 1D are schematic drawings to explain one embodiment of the present invention in which a monomolecular film of amphiphilic molecules prepared at an air/water interface is immobilized on a bead with a hydrophilic surface, where Fig. 1A is a schematic drawing of the beads and the monomolecular film of the amphiphilic molecules contained in a vessel, Fig. 1B is a schematic drawing of a contacting state between the amphiphilic molecules and the surface of the bead, Fig. 1 C is a schematic drawing of a reacting state between the amphiphilic molecule and the surface of the bead, and Fig. 1D is a schematic drawing of the amphiphilic molecules immobilized on the bead;

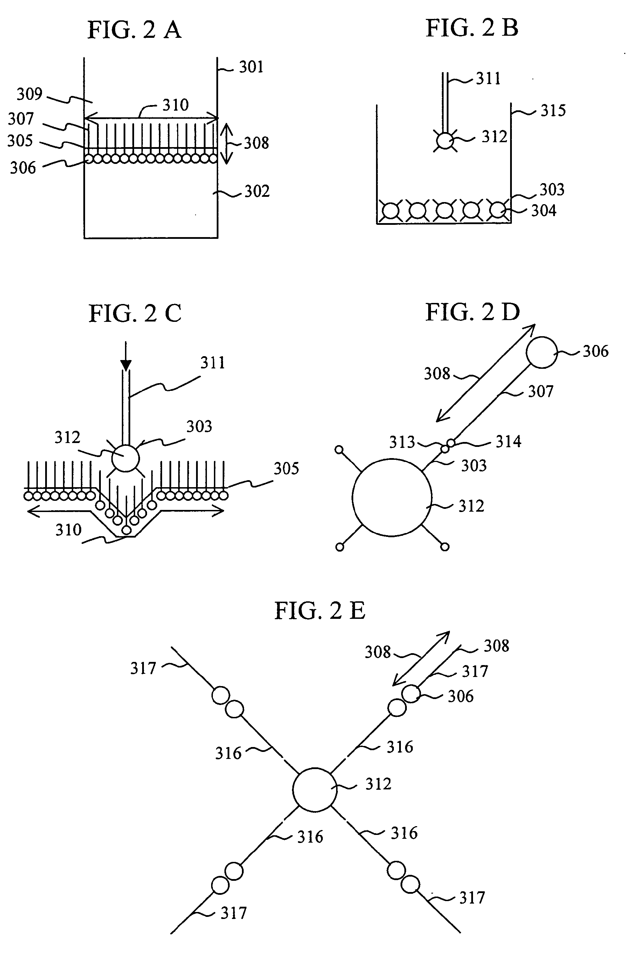

Figs. 2A, 2B, 2C, 2D, and 2E are schematic drawings to explain another embodiment of the present invention in which a monomolecular film of amphiphilic molecules prepared at an air/water interface is immobilized on a bead with a hydrophobic surface, where Fig. 2A is a schematic drawing of the monomolecular film of the amphiphilic molecules contained in a vessel, Fig. 2B is a schematic drawing of the bead captured with the tip of a bead picker, Fig. 2C is a schematic drawing of a contacting state between the amphiphilic molecules and the surface of the bead, Fig. 2D is a schematic drawing of a reacting state between the amphiphilic molecule and the surface of the bead, and Fig. 2E is a schematic drawing of the amphiphilic molecules immobilized on the bead;

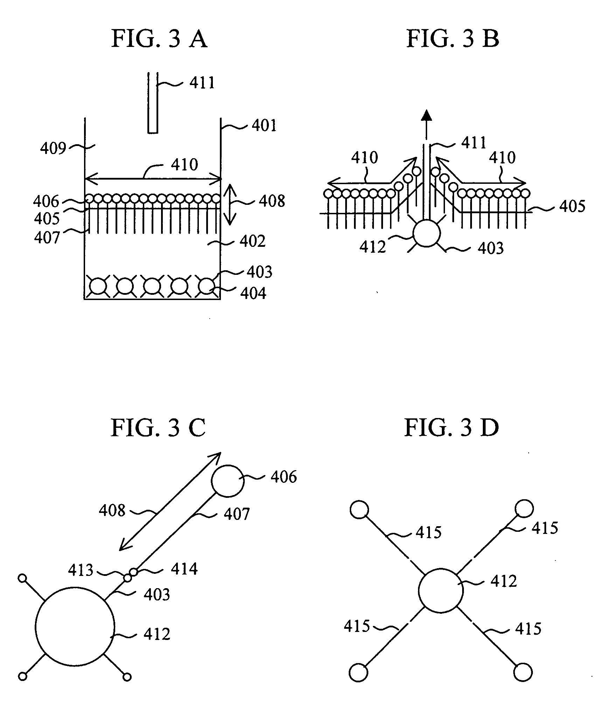

Figs. 3A, 3B, 3C, and 3D are schematic drawings to explain still another embodiment of the present invention in which a monomolecular film of amphiphilic molecules prepared at an air/oil interface is immobilized on a bead with a hydrophobic surface, where Fig. 3A is a schematic drawing of the beads and the monomolecular film of the amphiphilic molecules contained in a vessel, Fig. 3B is a schematic drawing of a contacting state between the amphiphilic molecules and the surface of the bead, Fig. 3C is a schematic drawing of a reacting state between the amphiphilic molecule and the surface of the bead, and Fig. 3D is a schematic drawing of the amphiphilic molecules immobilized on the bead;

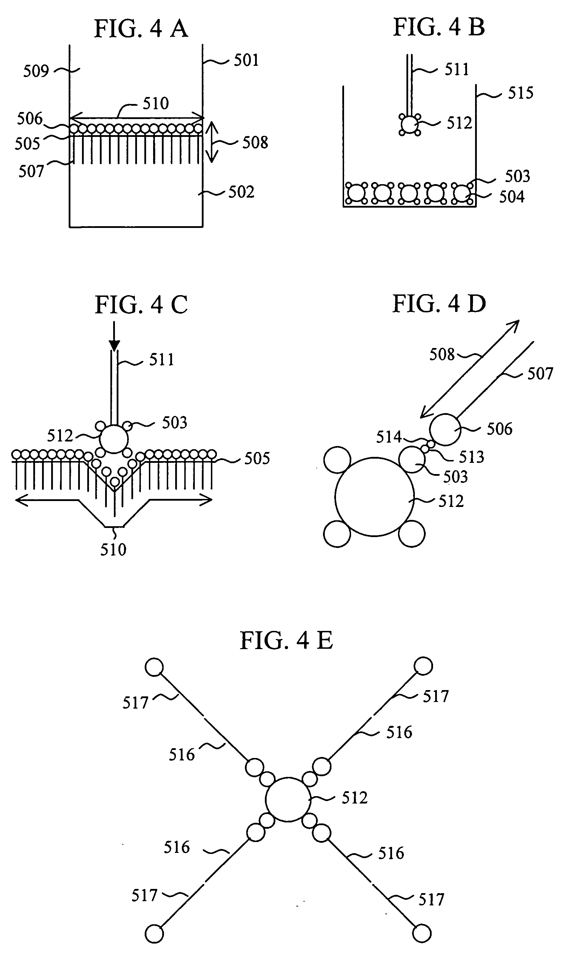

Figs. 4A, 4B, 4C, 4D, and 4E are schematic drawings to explain still another embodiment of the present invention in which a monomolecular film of amphiphilic molecules prepared at an air/oil interface is immobilized on a bead with a hydrophilic surface, where Fig. 4A is a schematic drawing of the monomolecular film of the amphiphilic molecules contained in a vessel, Fig. 4B is a schematic drawing of the bead captured with the tip of a bead picker, Fig. 4C is a schematic drawing of a contacting state between the amphiphilic molecules and the surface of the bead, Fig. 4D is a schematic drawing of a reacting state between the amphiphilic molecule and the surface of the bead, and Fig. 4E is a schematic drawing of the amphiphilic molecules immobilized on the bead;

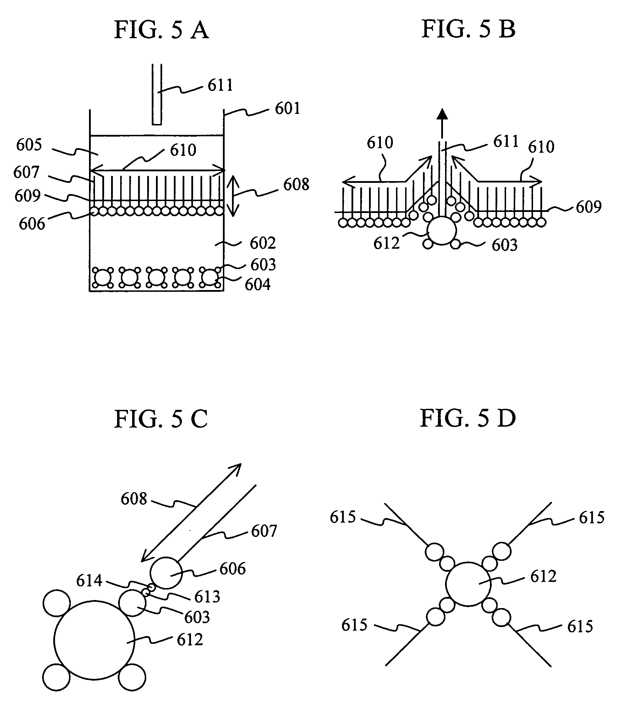

Figs. 5A, 5B, 5C, and 5D are schematic drawings to explain still another embodiment of the present invention in which a monomolecular film of amphiphilic molecules prepared at an oil/water interface is immobilized on a bead with a hydrophilic surface, where Fig. 5A is a schematic drawing of the beads and the monomolecular film of the amphiphilic molecules contained in a vessel, Fig. 5B is a schematic drawing of a contacting state between the amphiphilic molecules and the surface of the bead, Fig. 5C is a schematic drawing of a reacting state between the amphiphilic molecule and the surface of the bead, and Fig. 5D is a schematic drawing of the amphiphilic molecules immobilized on the bead;

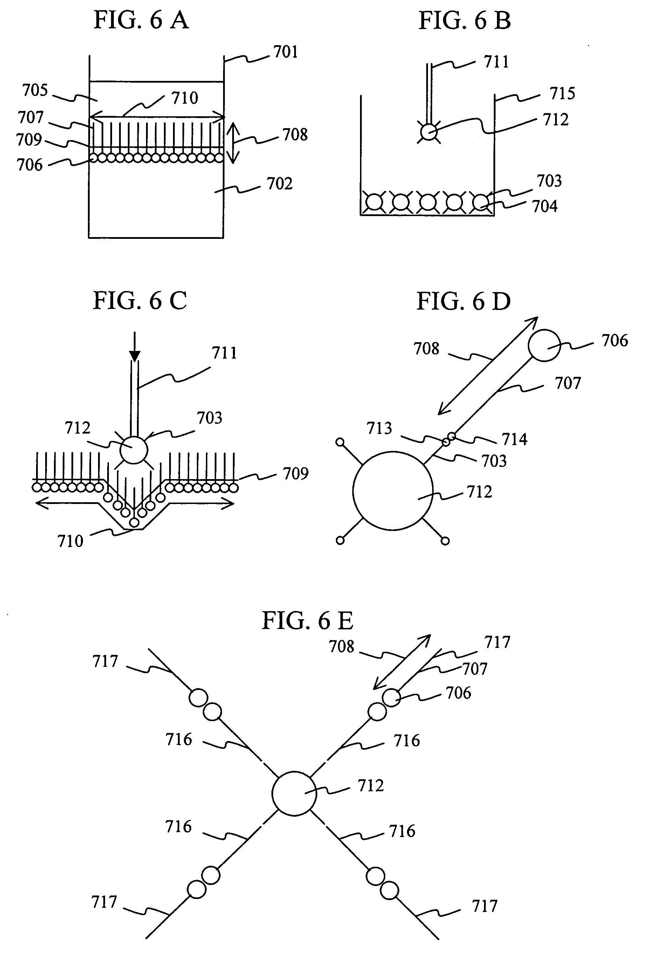

Figs. 6A, 6B, 6C, 6D, and 6E are schematic drawings to explain still another embodiment of the present invention in which a monomolecular film of amphiphilic molecules prepared at an oil/water interface is immobilized on a bead with a hydrophobic surface, where Fig. 6A is a schematic drawing of the monomolecular film of the amphiphilic molecule contained in a vessel, Fig. 6B is a schematic drawing of the bead captured with the tip of a bead picker, Fig. 6C is a schematic drawing of a contacting state between the amphiphilic molecules and the surface of the bead, Fig. 6D is a schematic drawing of a reacting state between the amphiphilic molecule and the surface of the bead, and Fig. 6E is a schematic drawing of the amphiphilic molecules immobilized on the bead in multilayers;

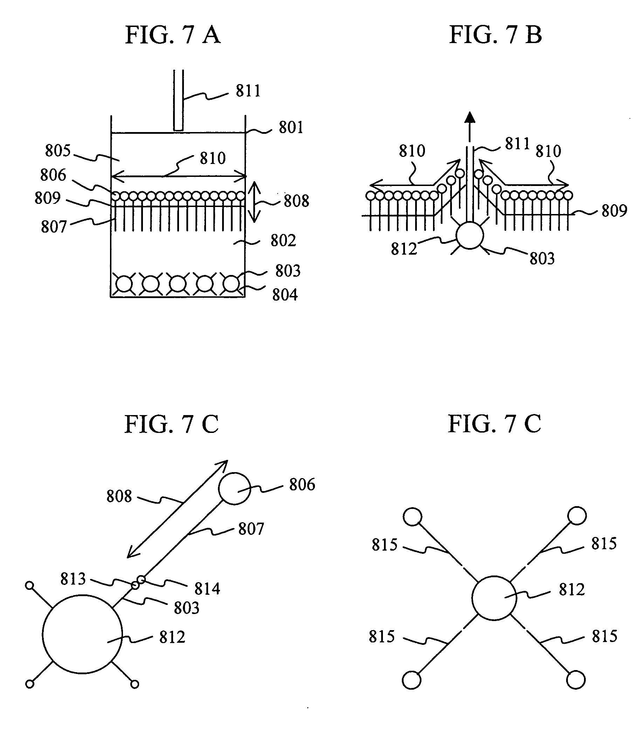

Figs. 7A, 7B, 7C, and 7D are schematic drawings to explain still another embodiment of the present invention in which a monomolecular film of amphiphilic molecules prepared at an oil/water interface is immobilized on a bead with a hydrophobic surface, where Fig. 7A is a schematic drawing of the beads and the monomolecular film of the amphiphilic molecules contained in a vessel, Fig. 7B is a schematic drawing of a contacting state between the amphiphilic molecules and the surface of the bead, Fig. 7C is a schematic drawing of a reacting state between the amphiphilic molecule and the surface of the bead, and Fig. 7D is a schematic drawing of the amphiphilic molecules immobilized on the bead;

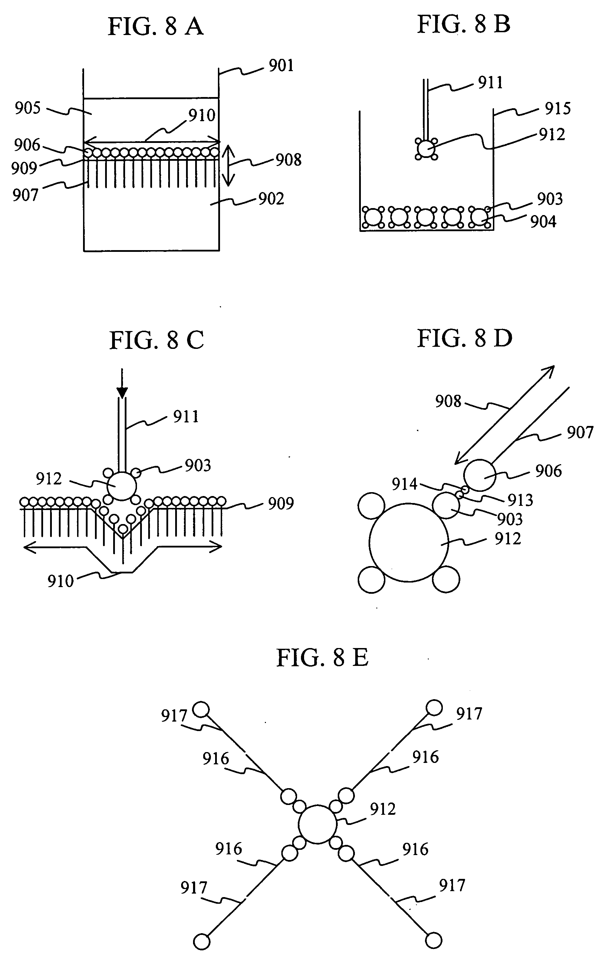

Figs. 8A, 8B, 8C, 8D, and 8E are schematic drawings to explain still another embodiment of the present invention in which a monomolecular film of amphiphilic molecules prepared at an oil/water interface is immobilized on a bead with a hydrophilic surface, where Fig. 8A is a schematic drawing of the monomolecular film of the amphiphilic molecules contained in a vessel, Fig. 8B is a schematic drawing of the bead captured with the tip of a bead picker, Fig. 8C is a schematic drawing of a contacting state between the amphiphilic molecules and the surface of the bead, Fig. 8D is a schematic drawing of a reacting state between the amphiphilic molecule and the surface of the bead, and Fig. 8E is a schematic drawing of the amphiphilic molecules immobilized on the bead in multilayers;

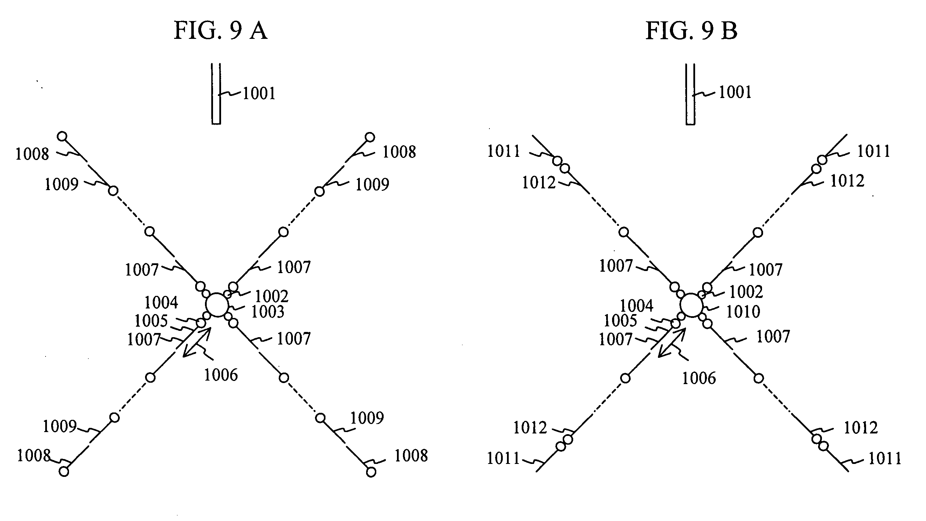

Figs. 9A and 9B are schematic drawings to explain still another embodiment of the present invention in which a monomolecular film of amphiphilic molecules is immobilized on a bead with a hydrophilic surface in multilayers, where Fig. 9A is a schematic drawing of monomolecular layers of the amphiphilic molecules immobilized on the bead in an even number of layers, and Fig. 9B is a schematic drawing of the monomolecular layers of the amphiphilic molecules immobilized on the bead in an odd number of layers;

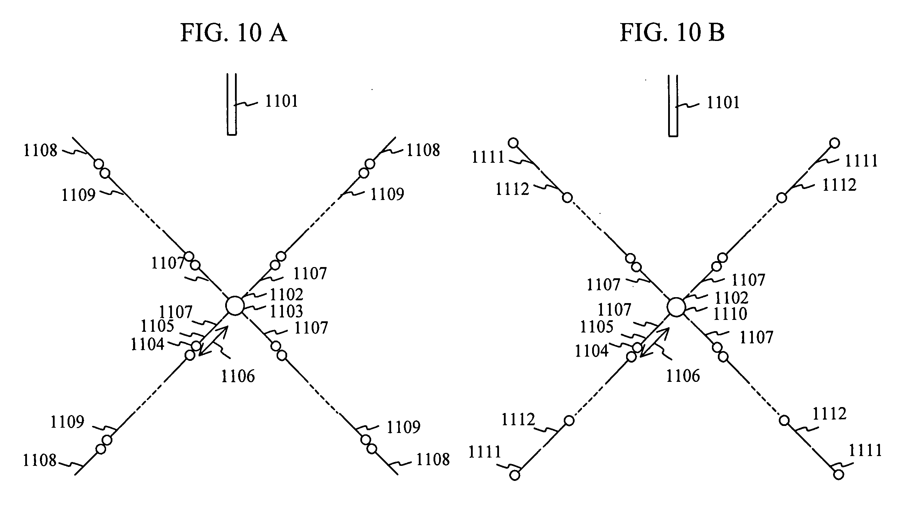

Figs. 10A and 10B are schematic drawings to explain still another embodiment of the present invention in which a monomolecular film of amphiphilic molecules is immobilized on a bead with a hydrophobic surface in multilayers, where Fig. 10A is a schematic drawing of monomolecular layers of the amphiphilic molecules immobilized on the bead in an even number of layers, and Fig. 10B is a schematic drawing of the monomolecular layers of the amphiphilic molecules immobilized on the bead in an odd number of layers;

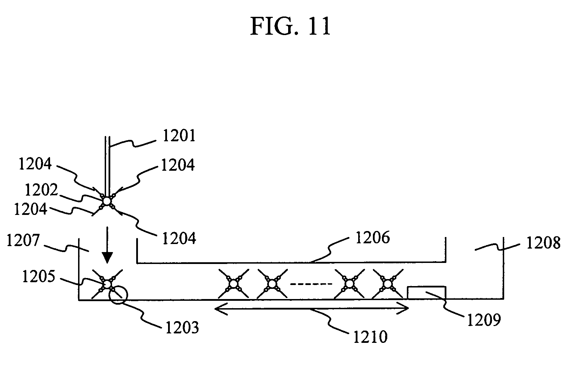

Fig. 11 is a schematic drawing to explain an embodiment of the present invention in which a capillary beads-array is fabricated by introducing a single bead with immobilized monomolecular layers of amphiphilic molecules in multilayers on the surface into a capillary formed on a soft resin and arraying the beads one by one in the capillary; and
Figs. 12A and 12B are schematic drawings to explain a conventional embodiment to capture beads with immobilized probe molecules, where Fig. 12A is a schematic drawing of the beads and the probe molecules present in a vessel before immobilization, and Fig. 12B is a schematic drawing of capturing a single bead with immobilized probe molecules with the tip of a bead picker of a beads-arrayer.

### DETAILED DESCRIPTION OF THE PREFERRED EMBODIMENTS

Figs. 1A to 1D are schematic drawings to explain one embodiment of the present invention in which a monomolecular film of amphiphilic molecules prepared at an air/water interface is immobilized on a bead with a hydrophilic surface.

After preparing water phase 202 by pouring water into a vessel 201, beads 204 having a specific gravity higher than water and hydrophilic portions 203 on the surface are put in the vessel and the beads 204 are allowed to sink in the water phase 202. Then, amphiphilic molecules 208 containing a hydrophilic portion 206 and a hydrophobic portion 207 are dropped onto an air/water interface 205 formed by air 209 and the water phase 202 in the vessel 201. At this time, the amphiphilic molecules 208 orient their hydrophilic portions 206 toward the water phase 202 and their hydrophobic portions 207 toward air 209 to form a thin film spreading over the air/water interface 205. This thin film of the amphiphilic molecules becomes a monomolecular film 210 when the area of the air/water interface is made sufficiently wide (Fig. 1A).

The tip of a bead picker 211 is moved to above the vessel 201 and dipped into the water phase 202 to capture a single bead 212 in the water phase 202. The tip of the bead picker 211 is lifted up so that the single bead 212 may reach the air/water interface 205. Concurrently with further lifting of the bead 212, the air/water interface 205 is lifted upward around the bead 212, and the hydrophilic portions 206 of the monomolecular film composed of the amphiphilic molecules are drawn toward the surface of the bead 212. This allows to form a covalent bond between a functional group 213 contained in the hydrophilic portion 203 on the bead surface and a functional group 214 contained in the hydrophilic portion 206 of the amphiphilic molecules. Thus, a monomolecular layer 215 of the amphiphilic molecules is firmly formed on the bead surface (Figs. 1B, 1C, and 1D).

The monomolecular layer 215 of the amphiphilic molecules formed on the bead surface has an orientation with their hydrophobic portions 207 of the amphiphilic molecules outward and their hydrophilic portions 206 toward the bead 212. In other words, it is possible in the present invention to immobilize the amphiphilic molecules 208 on the bead 212 having hydrophilic portions on the surfaces in uniform orientation (Figs. 1C and 1D).

Figs. 2A to 2E are schematic drawings to explain another embodiment of the present invention in which a monomolecular film of amphiphilic molecules prepared at an air/water interface is immobilized on a bead with a hydrophobic surface.

After preparing water phase 302 by pouring water into one vessel 301, amphiphilic molecules 308 containing a hydrophilic portion 306 and a hydrophobic portion 307 are dropped onto an air/water interface 305 formed by air 309 and the water phase 302. At this time, the amphiphilic molecules 308 orient their hydrophilic portions 306 toward the water phase 302 and their hydrophobic portions 307 toward air 309 to form a thin film spreading over the air/water interface 305. This thin film of the amphiphilic molecules 308 becomes a monomolecular film 310 when the area of the air/water interface 305 is made sufficiently wide (Fig. 2A).

The tip of a bead picker 311 is moved to above another vessel 315 in which beads 304 having hydrophobic portions 303 on the surface are placed, and then lifted down to capture a single bead 312 (Fig. 2B).

The tip of the bead picker 311 is lifted up. Then, the single bead 312 is moved to above the vessel 301 and lifted down from above the monomolecular film 310 of the amphiphilic molecules formed at the air/water interface 305 to the air/water interface 305. Concurrently with further lifting down of the single bead 312, the air/water interface 305 is pushed downward, and therefore, the hydrophobic portions 307 of the monomolecular film 310 composed of the amphiphilic molecules and formed at the air/oil interface 305 are drawn toward the surface of the bead 312. This allows to form a covalent bond between a functional group 313 contained in the hydrophobic portion 303 on the bead surface and a functional group 314 contained in the hydrophobic portion 307 of the amphiphilic molecules 308. Thus, a monomolecular layer 316 of the amphiphilic molecules 308 is firmly formed on the surface of the single bead 312 (Figs. 2C, 2D, and 2E).

The monomolecular layer 316 of the amphiphilic molecules formed on the bead surface has an orientation with their hydrophilic portions 306 of the amphiphilic molecules outward and their hydrophobic portions 307 toward the bead 312. In other words, it is possible in the present invention to immobilize the amphiphilic molecules 308 on the beads 312 having hydrophobic portions on the surface in uniform orientation (Figs. 2D and 2E).

Next, the tip of the bead picker 311 capturing the single bead 312 on which the monomolecular layer 316 of the amphiphilic molecules 308 is immobilized is lifted to the air/water interface 305 as it is. Then, the single bead 312 is passed through the air/water interface 305 to be lifted up in the air 309. In this way, it is possible to immobilize a second monomolecular layer 317 of the amphiphilic molecules 308 on the first monomolecular layer 316 of the amphiphilic molecules 308. At this time, the second monomolecular layer 317 of the amphiphilic molecules 308 formed on the surface of the single bead 312 orients their hydrophobic portions 307 of the amphiphilic molecules outward and their hydrophilic portions 306 toward the first monomolecular layer 316 of the amphiphilic molecules 308 (Figs. 2A, 2C, 2D, and 2E).

Figs. 3A to 3D are schematic drawings to explain still another embodiment of the present invention in which a monomolecular film of amphiphilic molecules prepared at an air/oil interface is immobilized on a bead with a hydrophobic surface.

After preparing oil phase 402 by pouring oil into a vessel 401, beads 404 having a specific gravity higher than the oil and hydrophobic portions 403 on the surface are put in the vessel and the beads 404 are allowed to sink in the oil phase 402. Then, amphiphilic molecules 408 containing a hydrophilic portion 406 and a hydrophobic portion 407 are dropped onto an air/oil interface 405 formed by air 409 and the oil phase 402 in the vessel 401. At this time, the amphiphilic molecules 408 orient their hydrophobic portions 407 toward the oil phase 402 and their hydrophilic portions 406 toward air 409 to form a thin film spreading over the air/oil interface 405. This thin film of the amphiphilic molecules becomes a monomolecular film 410 when the area of the air/oil interface 405 is made sufficiently wide (Figs. 3A and 3B).

The tip of a bead picker 411 is moved to above the vessel 401 and dipped into the oil phase 402 to capture a single bead 412 in the oil phase 402. The tip of the bead picker 411 is lifted up so that the single bead 412 may reach the air/oil interface 405. Concurrently with further lifting of the bead 412, the air/oil interface 405 is lifted upward around the bead 412, and the hydrophobic portions 407 of the monomolecular film composed of the amphiphilic molecules are drawn toward the surface of the bead 412. This allows to form a covalent bond between a functional group 413 contained in the hydrophobic portion 403 on the bead surface and a functional group 414 contained in the hydrophobic portion 407 of the amphiphilic molecules. Thus, a monomolecular layer 415 of the amphiphilic molecules is firmly formed on the bead surface (Figs. 3A, 3B, and 3C).

The monomolecular layer 415 of the amphiphilic molecules formed on the bead surface has an orientation with their hydrophilic portions 406 of the amphiphilic molecules outward and their hydrophobic portions 407 toward the bead 412. In other words, it is possible in the present invention to immobilize the amphiphilic molecules 408 on the beads 412 having hydrophobic portions on the surface in uniform orientation (Figs. 3C and 3D).

Figs. 4A to 4E are schematic drawings to explain still another embodiment of the present invention in which a monomolecular film of amphiphilic molecules prepared at an air/oil interface is immobilized on a bead with a hydrophilic surface.

After preparing oil phase 502 by pouring oil into one vessel 501, amphiphilic molecules 508 containing a hydrophilic portion 506 and a hydrophobic portion 507 are dropped onto an air/oil interface 505 formed by air 509 and the oil phase 502. At this time, the amphiphilic molecules 508 orient their hydrophobic portions 507 toward the oil phase 502 and their hydrophilic portions 506 toward air 509 to form a thin film spreading over the air/oil interface 505. This thin film of the amphiphilic molecules 508 becomes a monomolecular film 510 when the area of the air/oil interface 505 is made sufficiently wide (Fig. 4A).

The tip of a bead picker 511 is moved to above another vessel 515 in which beads 504 having hydrophilic portions 503 on the surface are placed, and then lifted down to capture a single bead 512 (Fig. 4B).

The tip of the bead picker 511 is lifted up. Then, the single bead 512 is moved to above the vessel 501 and lifted down from above the monomolecular film 510 of the amphiphilic molecules formed at the air/oil interface 505 to the air/oil interface 505. Concurrently with further lifting down of the single bead 512, the air/oil interface 505 is pushed downward, and therefore, the hydrophilic portions 506 of the monomolecular film 510 composed of the amphiphilic molecules and formed at the air/oil interface 505 are drawn toward the surface of the bead 512. This allows to form a covalent bond between a functional group 513 contained in the hydrophilic portion 503 on the bead surface and a functional group 514 contained in the hydrophilic portion 506 of the amphiphilic molecules 508. Thus, a monomolecular layer 516 of the amphiphilic molecules 508 is firmly formed on the surface of the single bead 512 (Figs. 4A, 4C, 4D, and 4E).

The monomolecular layer 516 of the amphiphilic molecules formed on the bead surface has an orientation with their hydrophobic portions 507 of the amphiphilic molecules outward and their hydrophilic portions 506 toward the bead 512. In other words, it is possible in the present invention to immobilize the amphiphilic molecules 508 on the beads 512 having hydrophilic portions on the surface in uniform orientation (Figs: 4D and 4E).

Next, the tip of the bead picker 511 capturing the single bead 512 on which the monomolecular layer 516 of the amphiphilic molecules 508 is immobilized is lifted to the air/oil interface 505 as it is. Then, the single bead 512 is passed through the air/oil interface 505 to be lifted up in the air 509. In this way, it is possible to immobilize a second monomolecular layer 517 of the amphiphilic molecules 508 on the first monomolecular layer 516 of the amphiphilic molecules 508. At this time, the second monomolecular layer 517 of the amphiphilic molecules 508 formed on the surface of the single bead 512 orients their hydrophilic portions 506 of the amphiphilic molecules outward and their hydrophobic portions 507 toward the first monomolecular layer 516 of the amphiphilic molecules 508 (Figs. 4A, 4D, and 4E).

Figs. 5A to 5D are schematic drawings to explain still another embodiment of the present invention in which a monomolecular film of amphiphilic molecules prepared at an oil/water interface is immobilized on a bead with a hydrophilic surface.

After preparing water phase 602 by pouring water into a vessel 601, beads 603 having a specific gravity higher than water and hydrophilic portions 603 on the surface are put in the vessel 601 and the beads 604 are allowed to sink in the water phase 602. Then, amphiphilic molecules 608 containing a hydrophilic portion 606 and a hydrophobic portion 607 are dropped onto the water phase 602. An oil having a specific gravity lower than water is gently poured into the vessel 601 to prepare oil phase 605 on top of the water phase 602 in the vessel 601. In the vessel 601, an oil/water interface 609 is formed by the water phase 602 and the oil phase 605. At this time, the amphiphilic molecules 608 orient their hydrophilic portions 606 toward the water phase 602 and their hydrophobic portions 607 toward the oil phase 605 to form a thin film spreading over the oil/water interface 609. This thin film of the amphiphilic molecules becomes a monomolecular film 610 when the area of the oil/water interface 609 is made sufficiently wide (Figs. 5A and 5B).

The tip of a bead picker 611 is moved to above the vessel 601 and dipped into the water phase 602 to capture a single bead 612 in the water phase 602. The tip of the bead picker 611 is lifted up so that the single bead 612 may reach the oil/water interface 609. Concurrently with further lifting of the bead 612, the oil/water interface 609 is lifted upward around the bead 612, and the hydrophilic portions 606 of the monomolecular film composed of the amphiphilic molecules 608 are drawn toward the surface of the bead 612. This allows to form a covalent bond between a functional group 613 contained in the hydrophilic portion 603 on the bead surface and a functional group 614 contained in the hydrophilic portion 606 of the amphiphilic molecules 608. Thus, a monomolecular layer 615 of the amphiphilic molecules 608 is firmly formed on the bead surface (Figs. 5A, 5B, 5C and 5D).

The monomolecular layer 615 of the amphiphilic molecules formed on the bead surface has an orientation with their hydrophobic portions 607 of the amphiphilic molecules outward and their hydrophilic portions 606 toward the bead 612. In other words, it is possible in the present invention to immobilize the amphiphilic molecules 608 on the bead 612 having hydrophilic portions on the surface in uniform orientation (Figs. 5C and 5D).

Figs. 6A to 6E are schematic drawings to explain still another embodiment of the present invention in which a monomolecular film of amphiphilic molecules prepared at an oil/water interface is immobilized on a bead with a hydrophobic surface.

After preparing water phase 702 by pouring water into one vessel 701, amphiphilic molecules 708 containing a hydrophilic portion 706 and a hydrophobic portion 707 are dropped onto the water phase 702. An oil having a specific gravity lower than water is gently poured into the vessel 701 to prepare oil phase 705 on top of the water phase 702 in the vessel 701. In the vessel 701, an oil/water interface 709 is formed by the water phase 702 and the oil phase 705. At this time, the amphiphilic molecules 708 orient their hydrophilic portions 706 toward the water phase 702 and their hydrophobic portions 707 toward the oil phase 705 to form a thin film spreading over the oil/water interface 709. This thin film of the amphiphilic molecules becomes a monomolecular film 710 when the area of the oil/water interface 709 is made sufficiently wide (Fig. 6A).

The tip of a bead picker 711 is moved to above another vessel 715 in which beads 704 with hydrophobic portions 703 on the surface are placed, and then lifted down to capture a single bead 712 (Fig. 6B).

The tip of the bead picker 711 is lifted up. Then, the single bead 712 is moved to above the vessel 701 and lifted down from above the monomolecular film 710 of the amphiphilic molecules formed at the oil/water interface 709 to the oil/water interface 709. Concurrently with further lifting down of the single bead 712, the oil/water interface 709 is pushed downward, and therefore, the hydrophobic portions 707 of the monomolecular film 710 composed of the amphiphilic molecules and formed at the oil/water interface 709 are drawn toward the surface of the bead 712. This allows to form a covalent bond between a functional group 713 contained in the hydrophobic portion 703 on the bead surface and a functional group 714 contained in the hydrophobic portion 707 of the amphiphilic molecules 708. Thus, a monomolecular layer 716 of the amphiphilic molecules 708 is firmly formed on the surface of the single bead 712 (Figs. 6B, 6C, 6D, and 6E).

The monomolecular layer 716 of the amphiphilic molecules 708 formed on the surface of the bead 712 has an orientation with their hydrophilic portions 706 of the amphiphilic molecules outward and their hydrophobic portions 707 toward the bead 712. In other words, it is possible in the present invention to immobilize the amphiphilic molecules 708 on the bead 712 with hydrophobic portions 703 on the surface in uniform orientation (Figs. 6D and 6E).

Next, the tip of the bead picker 711 capturing the single bead 712 on which the monomolecular layer 716 of the amphiphilic molecules 708 is immobilized is lifted to the oil/water interface 709 as it is. Then, the single bead 712 is passed through the oil/water interface 709 to be lifted to the oil phase 705. In this way, it is possible to immobilize a second monomolecular layer 717 of the amphiphilic molecules 708 on the first monomolecular layer 716 of the amphiphilic molecules 708. At this time, the second monomolecular layer 717 of the amphiphilic molecules 708 formed on the surface of the single bead 712 orients their hydrophobic portions 707 of the amphiphilic molecules outward and their hydrophilic portions 706 toward the first monomolecular layer 716 of the amphiphilic molecules 708 (Figs. 6A, 6B, 6D and 6E).

Figs. 7A to 7D are schematic drawings to explain still another embodiment of the present invention in which a monomolecular film of amphiphilic molecules prepared at an oil/water interface is immobilized on a bead with a hydrophobic surface.

After preparing oil phase 802 by pouring an oil having a specific gravity higher than water into a vessel 801, beads 804 having a specific gravity higher than the oil and hydrophobic portions 803 on the surface are put in the vessel 801 and the beads 804 are allowed to sink in the oil phase 802. Then, amphiphilic molecules 808 containing a hydrophilic portion 806 and a hydrophobic portion 807 are dropped onto the oil phase 802. Water is gently poured into the vessel 801 to prepare water phase 805 on top of the oil phase 802 in the vessel 801. In the vessel 801, an oil/water interface 809 is formed by the oil phase 802 and the water phase 805. At this time, the amphiphilic molecules 808 orient their hydrophilic portions 806 toward the water phase 805 and their hydrophobic portions 807 toward the oil phase 802 to form a thin film spreading over the oil/water interface 809. This thin film of the amphiphilic molecules 808 becomes a monomolecular film 810 when the area of the oil/water interface 809 is made sufficiently wide (Fig. 7A).

The tip of a bead picker 811 is moved to above the vessel 801 and dipped into the oil phase 802 to capture a single bead 812 in the oil phase 802. The tip of the bead picker 811 is lifted up so that the single bead 812 may reach the oil/water interface 809. Concurrently with further lifting of the bead 812, the oil/water interface 809 is lifted upward around the bead 812, and the hydrophobic portions 807 of the monomolecular film composed of the amphiphilic molecules are drawn toward the surface of the bead 812. This allows to form a covalent bond between a functional group 813 contained in the hydrophobic portion 803 on the bead surface and a functional group 814 contained in the hydrophobic portion 807 of the amphiphilic molecules 808. Thus, a monomolecular layer 815 of the amphiphilic molecules 808 is firmly formed on the surface of the bead 812 (Figs. 7A, 7B, 7C and 7D).

The monomolecular layer 815 of the amphiphilic molecules 808 formed on the surface of the bead 812 has an orientation with their hydrophilic portions 806 of the amphiphilic molecules 808 outward and their hydrophobic portions 807 toward the bead 812. In other words, it is possible in the present invention to immobilize the amphiphilic molecules 808 on the bead 812 with hydrophobic portions 803 on the surface in uniform orientation (Figs. 7C and 7D).

Figs. 8A to 8E are schematic drawings to explain still another embodiment of the present invention in which a monomolecular film of amphiphilic molecules prepared at an oil/water interface is immobilized on a bead with a hydrophilic surface.

After preparing oil phase 902 by pouring an oil having a specific gravity higher than water into one vessel 901, amphiphilic molecules 908 containing a hydrophilic portion 906 and a hydrophobic portion 907 are dropped onto the oil phase 902. Water is gently poured into the vessel 901 to prepare water phase 905 on top of the oil phase 902 in the vessel 901. In the vessel 901, an oil/water interface 909 is formed by the oil phase 902 and the water phase 905. At this time, the amphiphilic molecules 908 orient their hydrophilic portions 906 toward the water phase 905 and their hydrophobic portions 907 toward the oil phase 902 to form a thin film spreading over the oil/water interface 909. This thin film of the amphiphilic molecules 908 becomes a monomolecular film 910 when the area of the oil/water interface 909 is made sufficiently wide (Fig. 8A).

The tip of a bead picker 911 is moved to above another vessel 915 in which beads 904 with hydrophilic portions 903 on the surface are placed, and then lifted down to capture a single bead 912 (Fig. 8B).

The tip of the bead picker 911 is lifted up. Then, the single bead 912 is moved to above the vessel 901 and lifted down from above the monomolecular film 910 of the amphiphilic molecules 908 formed at the oil/water interface 909 to the oil/water interface 909. Concurrently with further lifting down of the single bead 912, the oil/water interface 909 is pushed downward, and therefore, the hydrophilic portions 906 of the monomolecular film 910 composed of the amphiphilic molecules 908 and formed at the oil/water interface 909 are drawn toward the surface of the bead 912. This allows to form a covalent bond between a functional group 913 contained in the hydrophilic portion 903 on the bead surface and a functional group 914 contained in the hydrophilic portion 906 of the amphiphilic molecules 908. Thus, a monomolecular layer 916 of the amphiphilic molecules 908 is firmly formed on the surface of the single bead 912 (Figs. 8A, 8C, 8D, and 8E).

The monomolecular layer 916 of the amphiphilic molecules 908 formed on the surface of the bead 912 has an orientation with their hydrophobic portions 907 of the amphiphilic molecules 908 outward and their hydrophilic portions 906 toward the bead 912. In other words, it is possible in the present invention to immobilize the amphiphilic molecules 908 on the beads 912 with hydrophilic portions 903 on the surface in uniform orientation (Figs. 8D and 8E).

Next, the tip of the bead picker 911 capturing the single bead 912 on which the monomolecular layer 916 of the amphiphilic molecules 908 is immobilized is lifted to the oil/water interface 909 as it is. Then, the single bead 912 is passed through the oil/water interface 909 to be lifted to the water phase 905. In this way, it is possible to immobilize a second monomolecular layer 917 of the amphiphilic molecules 908 on the first monomolecular layer 916 of the amphiphilic molecules 908. At this time, the second monomolecular layer 917 of the amphiphilic molecules 908 formed on the surface of the single bead 912 orients their hydrophilic portions 906 of the amphiphilic molecules outward and their hydrophobic portions 907 toward the first monomolecular layer 916 of the amphiphilic molecules 908 (Figs. 8C, 8D, and 8E).

Fig. 9 is a schematic drawing to explain still another embodiment of the present invention in which monomolecular films of amphiphilic molecules are immobilized on a bead with a hydrophilic surface in multilayers. The embodiments of the present invention shown in Figs. 1 to 8 are repeated two or more times while holding a single bead 1003 with hydrophilic portions 1002 on the surface at the tip of a bead picker 1001. In this way, monomolecular layers 1007 of amphiphilic molecules 1006 containing a hydrophilic portion 1004 and a hydrophobic portion 1005 can be immobilized in multilayers on the surface of the single bead 1003 with a hydrophilic surface and being held at the tip of the bead picker 1001. The kinds of the amphiphilic molecules 1006 constituting the monomolecular layer are not limited. Different amphiphilic molecules may be used for their immobilization for each layer, and many kinds of amphiphilic molecules may also be immobilized in the same layer.

When the monomolecular layers of the amphiphilic molecules 1006 are immobilized on the surface of the single bead 1003 with the hydrophilic surface in an even number of layers, that is, 2n layers (where n is a positive integer), the outermost (2n)th monomolecular layer 1008 orients the hydrophilic portions 1004 of the amphiphilic molecules 1006 outward and the hydrophobic portions 1005 toward the (2n-1)th monomolecular layer 1009 of the amphiphilic molecules 1006 (Fig. 9A). On the other hand, when the monomolecular layers of the amphiphilic molecules 1006 are immobilized on the surface of a single bead 1010 with a hydrophilic surface in an odd number 'of layers, that is, (2n-1) layers (where n is a positive integer), the outermost (2n-1)th monomolecular layer 1011 orients the hydrophobic portions 1005 of the amphiphilic molecules 1006 outward and the hydrophilic portions 1004 toward the (2n-2)th monomolecular layer 1012 of the amphiphilic molecules 1006 (Fig. 9B).

Fig. 10 is a schematic drawing to explain still another embodiment of the present invention in which monomolecular films of amphiphilic molecules are immobilized on a bead with a hydrophobic surface in multilayers. The embodiments of the present invention shown in Figs. 1 to 8 are repeated two or more times while retaining a single bead 1103 with hydrophobic portions 1102 on the surface at the tip of a bead picker 1101. In this way, monomolecular layers 1107 of amphiphilic molecules 1106 containing a hydrophilic portion 1104 and a hydrophobic portion 1105 can be immobilized in multilayers on the surface of the single bead 1103 with a hydrophobic surface and being held at the tip of the bead picker 1101. The kinds of the amphiphilic molecules 1106 constituting the monomolecular layer are not limited. Different amphiphilic molecules may be used for their immobilization for each layer, and many kinds of amphiphilic molecules may also be immobilized in the same layer.

When the monomolecular layer of the amphiphilic molecules 1106 is immobilized on the surface of the single bead 1103 having the hydrophobic surface in an even number of layers, that is, 2n layers (where n is a positive integer), the outermost (2n)th monomolecular layer 1108 orients the hydrophobic portions 1105 of the amphiphilic molecules 1106 outward and the hydrophilic portions 1104 toward the (2n-1)th monomolecular layer 1109 of the amphiphilic molecules 1106 (Fig. 10A). On the other hand, when the monomolecular layers of the amphiphilic molecules 1106 are immobilized on the surface of the single bead 1110 having a hydrophobic surface in an odd number of layers, that is, (2n-1) layers (where n is a positive integer), the outermost (2n-1)th monomolecular layer 1111 orients the hydrophilic portions 1104 of the amphiphilic molecules 1106 outward and the hydrophobic portions 1105 toward the (2n-2)th monomolecular layer 1112 of the amphiphilic molecules 1106 (Fig. 10B).

Fig. 11 is a schematic drawing to explain an embodiment of the present invention in which a capillary beads-array is fabricated by introducing a single bead with immobilized monomolecular layers of amphiphilic molecules in multilayers on the surface into a capillary formed on a molded product made of soft resin or the like and arraying the beads one by one inside the capillary. A bead 1205 with immobilized monomolecular layers 1204 of amphiphilic molecules 1203 in multilayers on the surface is prepared by carrying out the embodiment of the present invention shown in Figs. 9 or 10 while holding a single bead 1202 at the tip of a bead picker 1201 of a beads-arrayer. The tip of the bead picker 1201 of the beads-arrayer is moved to an inlet 1207 of a capillary 1206 formed on a soft resin, and the bead 1205 is released from the tip of the bead picker 1201 of the beads-arrayer and introduced into the inlet 1207 of the capillary. The bead 1205 is dislocated from the inlet 1207 to an outlet 1208 by applying a negative pressure from the outlet 1208 of the capillary 1206 and stopped by a bead stopper 1209 on the outlet 1208 side. Repeating the above operation a multiple number of times allows fabricating a capillary beads-array 1210 by arraying the single bead 1205 with immobilized monomolecular layers of amphiphilic molecules 1203 in multilayers on the surface one by one with a predetermined number and in a predetermined order.

According to the present invention, amphiphilic molecules that are scarcely soluble in solvents can be immobilized readily and reliably on the surface of granular beads in multilayers, each in a state of a monomolecular layer with a uniform molecular orientation. Furthermore, a capillary beads-array may be fabricated by arraying the beads inside a capillary formed of soft resin or the like. A beads-array product attractive to users may be provided by immobilizing amphiphilic molecules highly useful in biochemistry and immunology on the granular beads, arraying the beads, and fabricating the capillary beads-array.

## Claims

1. Beads with immobilized monomolecular layers of amphiphilic molecules via covalent bonds.

2. A method of producing beads with a monomolecular layer of immobilized amphiphilic molecules on the surface, the method comprising the steps of:
forming a monomolecular film of the amphiphilic molecules at any one of (1) an air/water interface formed by air and water, (2) an air/oil interface formed by air and oil, and (3) an oil/water interface formed by oil and water;
capturing a single bead by a bead picker; and
moving the bead in the direction perpendicular to the monomolecular film of the amphiphilic molecules by moving the tip of the bead picker with the captured bead in the direction perpendicular to the interface to immobilize the monomolecular layer of the amphiphilic molecules on the surface of the bead.

3. The method of producing beads with a monomolecular layer of immobilized amphiphilic molecules on the surface according to claim 2, wherein the monomolecular layer of the amphiphilic molecules is immobilized on the bead surface in a plurality of layers by repeating a multiple number of times the step of moving the bead in the direction perpendicular to the monomolecular film of the amphiphilic molecules by moving the tip of the bead picker with the captured bead in the direction perpendicular to the interface to immobilize the monomolecular layer of the amphiphilic molecules on the surface of the bead.

4. The method of producing beads with a monomolecular layer of immobilized amphiphilic molecules on the surface according to claim 2 or 3, wherein the monomolecular layer of the amphiphilic molecules is formed on the bead surface by steps including:
preparing water phase by pouring water into a vessel;
putting beads having a specific gravity higher than water and hydrophilic portions on the surface in the vessel;
allowing the beads to sink in the water phase;
forming an air/water interface between air and the water phase in the vessel;
dropping amphiphilic molecules containing a hydrophilic portion and a hydrophobic portion onto the air/water interface;
forming a monomolecular film of the amphiphilic molecules at the air/water interface;
moving the tip of the bead picker to above the vessel;
dipping the tip of the bead picker into the water phase;
capturing a single bead in the water phase;
lifting up the tip of the bead picker to allow the single bead to reach the air/water interface; and
allowing forming a covalent bond between a functional group contained in the hydrophilic portion on the bead surface and a functional group contained in the hydrophilic portion of the amphiphilic molecules.

5. The method of producing beads with a monomolecular layer of immobilized amphiphilic molecules on the surface according to claim 2 or 3, wherein a second layer of the monomolecular layer of the amphiphilic molecules is immobilized on a first layer of the monomolecular layer of the amphiphilic molecules by steps including:
preparing water phase by pouring water into one vessel;
dropping amphiphilic molecules containing a hydrophilic portion and a hydrophobic portion onto an air/water interface formed by air and the water phase;
forming a monomolecular film of the amphiphilic molecules at the air/water interface;
moving the tip of the bead picker to above another vessel containing beads having hydrophobic portions on the surface;
lifting down the tip of the bead picker;
capturing a single bead;
lifting up the tip of the bead picker;
moving the single bead to above the vessel in which the air/water interface is formed;
lifting down the single bead from above the monomolecular film of the amphiphilic molecules formed at the air/water interface to the air/water interface;
allowing forming a covalent bond between a functional group contained in the hydrophobic portions on the bead surface and a functional group contained in the hydrophobic portion of the amphiphilic molecules;
forming a monomolecular layer of the amphiphilic molecules firmly on the surface of the single bead;
lifting the tip of the bead picker capturing the bead again up to the air/water interface; and
passing the bead through the air/water interface to be lifted up in the air.

6. The method of producing beads with a monomolecular layer of immobilized amphiphilic molecules on the surface according to claim 2 or 3, wherein the monomolecular layer of the amphiphilic molecules are formed on the bead surface by steps including:
preparing oil phase by pouring an oil into a vessel;
putting beads having a specific gravity higher than the oil and hydrophobic portions on the surface in the vessel;
allowing the beads to sink in the oil phase;
dropping amphiphilic molecules containing a hydrophilic portion and a hydrophobic portion onto an air/oil interface formed by air and the oil phase in the vessel;
forming a monomolecular film of the amphiphilic molecules;
moving the tip of the bead picker to above the vessel;
dipping the tip of the bead picker into the oil phase;
capturing a single bead in the oil phase;
lifting up the tip of the bead picker to allow the single bead to reach the air/oil interface; and
allowing forming a covalent bond between a functional group contained in the hydrophobic portion on the bead surface and a functional group contained in the hydrophobic portion of the amphiphilic molecules.

7. The method of producing beads with a monomolecular layer of immobilized amphiphilic molecules on the surface according to claim 2 or 3, wherein a second layer of the monomolecular layer of the amphiphilic molecules is immobilized on a first layer of the monomolecular layer of the amphiphilic molecules by steps including:
preparing oil phase by pouring oil into one vessel;
dropping amphiphilic molecules containing a hydrophilic portion and a hydrophobic portion onto an air/oil interface formed by air and the oil phase;
forming a monomolecular film of the amphiphilic molecules at the air/oil interface;
moving the tip of the bead picker to above another vessel containing beads having hydrophilic portions on the surface;
lifting down the tip of the bead picker;
capturing a single bead;
lifting up the tip of the bead picker;
moving the single bead to above the vessel in which the air/oil interface is formed;
lifting down the single bead from above the monomolecular film of the amphiphilic molecules formed at the air/oil interface to the air/oil interface;
allowing forming a covalent bond between a functional group contained in the hydrophilic portions on the bead surface and a functional group contained in the hydrophilic portion of the amphiphilic molecules;
forming a monomolecular layer of the amphiphilic molecules on the surface of the single bead;
lifting the tip of the bead picker capturing the bead again up to the air/oil interface; and
passing the bead through the air/oil interface to be lifted up in the air.

8. The method of producing beads with a monomolecular layer of immobilized amphiphilic molecules on the surface according to claim 2 or 3, wherein the monomolecular layer of the amphiphilic molecules is formed on the bead surface by steps including:
preparing water phase by pouring water into a vessel;
putting beads having a specific gravity higher than water and hydrophilic portions on the surface in the vessel;
allowing the beads to sink in the water phase;
dropping amphiphilic molecules containing a hydrophilic portion and a hydrophobic portion onto the water phase;
pouring gently an oil having a specific gravity lower than water into the vessel;
preparing oil phase on top of the water phase in the vessel;
forming an oil/water interface by the water phase and the oil phase in the vessel, and a monomolecular film of the amphiphilic molecules at the oil/water interface;
moving the tip of the bead picker to above the vessel;
lifting down the tip of the bead picker to the water phase;
capturing a single bead in the water phase;
lifting up the tip of the bead picker to allow the single bead to reach the oil/water interface; and
allowing forming a covalent bond between a functional group contained in the hydrophilic portion on the bead surface and a functional group contained in the hydrophilic portion of the amphiphilic molecules.

9. The method of producing beads with a monomolecular layer of immobilized amphiphilic molecules on the surface according to claim 2 or 3, wherein a second layer of the monomolecular layer of the amphiphilic molecules is immobilized on a first layer of the monomolecular layer of the amphiphilic molecules by steps including:
preparing water phase by pouring water into one vessel;
dropping amphiphilic molecules containing a hydrophilic portion and a hydrophobic portion onto the water phase;
pouring gently an oil having a specific gravity lower than water into the vessel;
preparing an oil phase on top of the water phase in the vessel;
forming an oil/water interface by the water phase and the oil phase in the vessel, and a monomolecular film of the amphiphilic molecules at the oil/water interface;
moving the tip of the bead picker to above another vessel containing beads having hydrophobic portions on the surface;
lifting down the tip of the bead picker;
capturing a single bead;
lifting up the tip of the bead picker;
moving the single bead to above the vessel in which the oil/water interface is formed;
lifting down the single bead from above the monomolecular film of the amphiphilic molecules formed at the oil/water interface to the oil/water interface;
allowing forming a covalent bond between a functional group contained in the hydrophobic portions on the bead surface and a functional group contained in the hydrophobic portion of the amphiphilic molecules;
forming a monomolecular layer of the amphiphilic molecules on the surface of the single bead;
lifting the tip of the bead picker capturing the bead again up to the oil/water interface; and
passing the bead through the oil/water interface to be lifted up in the oil phase.

10. The method of producing beads with a monomolecular layer of immobilized amphiphilic molecules on the surface according to claim 2 or 3, wherein the monomolecular layer of the amphiphilic molecules is formed on the bead surface by steps including:
preparing oil phase by pouring an oil having a specific gravity higher than water into a vessel;
putting beads having a specific gravity higher than the oil and hydrophobic portions on the surface in the vessel;
allowing the beads to sink in the oil phase;
dropping amphiphilic molecules containing a hydrophilic portion and a hydrophobic portion onto the oil phase;
pouring water gently into the vessel;
preparing water phase on top of the oil phase in the vessel;
forming an oil/water interface by the water phase and the oil phase in the vessel, and a monomolecular film of the amphiphili.c molecules at the oil/water interface;
moving the tip of the bead picker to above the vessel;
dipping the tip of the bead picker into the oil phase;
capturing a single bead in the oil phase;
lifting up the tip of the bead picker to allow the bead to reach the oil/water interface; and
allowing forming a covalent bond between a functional group contained in the hydrophobic portion on the bead surface and a functional group contained in the hydrophobic portion of the amphiphilic molecules.

11. The method of producing beads with a monomolecular layer of immobilized amphiphilic molecules on the surface according to claim 2 or 3, wherein a second layer of the monomolecular layer of the amphiphilic molecules is immobilized on a first layer of the monomolecular layer of the amphiphilic molecules by steps including:
preparing oil phase by pouring an oil having a specific gravity higher than water into one vessel;
dropping amphiphilic molecules containing a hydrophilic portion and a hydrophobic portion onto the oil phase;
pouring water gently into the vessel;
forming water phase on top of the oil phase in the vessel;
forming an oil/water interface by the oil phase and the water phase in the vessel, and a monomolecular film of the amphiphilic molecules at the oil/water interface;
moving the tip of the bead picker to above another vessel containing beads having hydrophilic portions on the surface;
lifting down the tip of the bead picker;
capturing a single bead;
lifting up the tip of the bead picker;
moving the single bead to above the vessel in which the oil/water interface is formed;
lifting down the single bead from above the monomolecular film of the amphiphilic molecules formed at the oil/water interface to the oil/water interface;
allowing forming a covalent bond between a functional group contained in the hydrophilic portions on the bead surface and a functional group contained in the hydrophilic portion of the amphiphilic molecules;
forming a monomolecular layer of the amphiphilic molecules firmly on the surface of the single bead;
lifting the tip of the bead picker capturing the bead again up to the oil/water interface; and
passing the bead through the oil/water interface to be lifted up to the water phase.

12. A method of fabricating a capillary beads-array in which the beads with immobilized amphiphilic molecules on the surface according to claim 1 are arrayed in a capillary formed on a soft resin.

13. The method of fabricating a capillary beads-array according to claim 12, wherein the capillary beads-array is fabricated by steps including:
capturing a single bead with the tip of a bead picker of a beads-arrayer;
conducting the operation according to claims 4 to 11 to produce beads with immobilized monomolecular layers of the amphiphilic molecules in a plurality of layers of the surface;
moving the tip of the bead picker of the beads-arrayer to an inlet of the capillary formed on a soft resin;
releasing the bead from the tip of the bead picker of the beads-arrayer;
introducing the bead into the inlet of the capillary;
dislocating the bead from the inlet to an outlet by applying a negative pressure from the outlet of the capillary;
stopping the bead at a bead stopper placed on the outlet side;
repeating the above operation a multiple number of times; and
arraying the beads with immobilized monomolecular layers of the amphiphilic molecules in a plurality of layers on the surface with a predetermined number and in a predetermined order.
